# EUROPÄISCHE PATENTSCHRIFT

(11) **EP 1 062 045 B1**
(45) Veröffentlichungstag und Bekanntmachung des Hinweises auf die Patenterteilung: **03.09.2003**
(21) Anmeldenummer: 99907610.2
(22) Anmeldetag: 08.03.1999
(51) Int. Cl.: B01L 7/00, B01D 5/00

(54) **EINRICHTUNG ZUR THERMISCHEN BEHANDLUNG VON FLÜSSIGKEITEN**
DEVICE FOR LIQUID HEAT TREATMENT
DISPOSITIF POUR LE TRAITEMENT THERMIQUE DE LIQUIDES

(30) Priorität: 12.03.1998 DE 19810833
(43) Veröffentlichungstag der Anmeldung: 27.12.2000
(73) Patentinhaber: Herz, Helmut, Dipl.-Ing., 85764 Oberschleissheim (DE); Kaufmann, Klaus, 85764 Oberschleibheim (DE)
(72) Erfinder: Herz, Helmut, Dipl.-Ing., 85764 Oberschleissheim (DE); Kaufmann, Klaus, 85764 Oberschleibheim (DE)
(74) Vertreter: Kuhnen & Wacker
(86) Internationale Anmeldenummer: EP9901485
(87) Internationale Veröffentlichungsnummer: WO99046048

(56) Entgegenhaltungen:
- EP-A- 0 501 665
- EP-A- 0 685 698
- DE-A- 2 409 607
- DE-A- 4 131 088
- DE-A- 19 701 006
- GB-A- 299 084
- US-A- 3 894 578
- US-A- 4 340 114
- US-A- 4 511 435
- US-A- 4 908 051
- US-A- 5 537 508
- TSCHERNJAEW J ET AL: "MIKRODESTILLATION VON MEHRKOMPONENTENSYSTEMEN" CHEMIE. INGENIEUR. TECHNIK, Bd. 68, Nr. 3, 1. März 1996 (1996-03-01), Seiten 272-276, XP000555954

## Beschreibung

Die Erfindung betrifft eine Einrichtung zur thermischen Behandlung von Flüssigkeiten mit mindestens je einem ersten Behälterraum, dem mittels einer Heizeinrichtung zum Erhitzen und mindestens teilweisen Verdampfen der Flüssigkeit Wärmeenergie zuführbar ist, sowie mit mindestens je einem zweiten Behälterraum, in den der Dampf zur mindestens teilweisen Kondensation einführbar und von dem Wärmeenergie mittels einer Kühleinrichtung abführbar ist, sowie mit einem bzw. je einem Kondensatrückflußkanal, der von dem zweiten zum ersten Behälterraum führt.

Erhitzt man, beispielsweise im Laborbetrieb, Flüssigkeiten, so geht bei dieser Wärmebehandlung ein Teil der Flüssigkeit durch Verdampfung verloren, wenn nicht dafür Sorge getragen wird, daß der Dampf aufgefangen, kondensiert und das Kondensat zu dem zu behandelnden Flüssigkeitsvolumen zurückgeführt wird. Allgemein bekannt sind Anordnungen, bei denen der bei der Flüssigkeitserhitzung entstehende Dampf über einen Kühler geleitet wird, das Kondensat in einem Sammler aufgefangen und von dem Sammler über eine Kondensatrückflußleitung wieder dem Raum zugeführt wird, in welchem die Flüssigkeit erhitzt wird.

Bei sehr geringen Flüssigkeitsmengen, welche jeweils der thermischen Behandlung unterzogen werden sollen, ist der apparative Aufwand für das Auffangen des Dampfes und für die Anbringung eines Kühlers sehr hoch. Die Einrichtungen sind vergleichsweise kompliziert und es kann vorkommen, daß ein wesentlicher Teil der zu behandelnden Flüssigkeit sich in den Einrichtungen zum Auffangen des Dampfes und zu dessen Kondensation befindet und der Rücklaufweg für das Kondensat sehr weit ist.

Aus der DE-PS 1 014 353 und der GB-PS 299 084 ist es ferner bekannt, in die Mündung eines Behältnisses einen etwa zylindrischen Kühler derart einzusetzen, daß zwischen der Kühleraußenwand und der Behälterinnenwand ein etwa hohlzylindrischer Spaltraum gebildet ist.

Durch die Erfindung soll die. Aufgabe gelöst werden, eine Einrichtung der eingangs kurz definierten Art so auszugestalten, daß der Wärmeubergang zwischen den Behälteraumen und der Heizeinrichtung und/oder der kühleinrichtung stark verbessert wird.

Diese Aufgabe wird erfindungsgemäß mit den Merkmalen von Patentanspruch 1 gelöst. Vorteilhafte Ausgestaltungen und Weiterbildungen sind Gegenstand der nachgeordneten Ansprüche, auf deren Inhalt hierdurch ausdrücklich hingewiesen wird, ohne an dieser Stelle den Wortlaut zu wiederholen.

Es sei hier darauf hingewiesen, daß die Teile der vorliegend angegebenen Einrichtung gemäß einer bevorzugten Ausführungsform in erster Linie handelsübliche Teile sein können, wobei der äußere Behälter zur Aufnahme der zu behandelnden Flüssigkeit etwa von einem größeren Reagenzglas gebildet ist, während der Verdrängerkörper, der koaxial auf eine bestimmte Tiefe in den äußeren Behälter eingeführt und durch Abstandshalter darin gehalten ist, von einem entsprechenden Reagenzglas kleineren Durchmessers gebildet sein kann. Einrichtungen der hier angegebenen Art lassen sich also mit geringstem Aufwand und kleinen Kosten verwirklichen. Gleichzeitig ist die angegebene Konstruktion einer Vielfalt von Abwandlungen zur Anpassung an bestimmte Anwendungsfälle zugänglich.

Nachfolgend werden einige Ausführungsformen anhand der Zeichnung näher erläutert. Es stellen dar:
Fig. 1 eine teilweise im Schnitt gezeichnete Seitenansicht einer Ausführungsform einer Einrichtung der hier angegebenen Art,
Fig. 2 eine ausschnittsweise vergrößerte Schnittdarstellung eines Teiles der Einrichtung von Fig. 1 zur Erläuterung der Wirkungsweise,
Fig. 3 eine gegenüber Fig. 1 abgewandelte Ausführungsform einer Einrichtung der hier angebenen Art,
Fig. 4 eine teilweise im Schnitt gezeichnete Seitenansicht einer weiteren abgewandelten Ausführungsform,
Fig. eine gegenüber den Ausführungsformen nach den Figuren 1 und 3 nochmals abgewandelte Ausführungsform in Schnittdarstellung und Seitenansicht,
Fig. 6 eine Schnitt-Seitenansicht einer Einrichtung der hier angegebenen Art zur Erläuterung zweier weiterer Ausführungsformen, und
Fig. 7 eine teilweise im Schnitt gezeichnete Seitenansicht des oberen Teiles einer gegenüber der Ausführungsform nach Fig. 1 abermals abgewandelten Ausführungsform,
Fig. 8 eine im Schnitt gezeichnete Seitenansicht einer Einrichtung der hier angegebenen Art mit den Wärmetransport zwischen Einrichtungsteilen verbessernden Hülsenanordnungen,
Fig. 9 eine ausschnittsweise Darstellung einer Kühleinrichtung mit einer den Wärmetransport zu einem Behälter verbessernden Hülsenanordnung in perspektivischer Darstellung,
Fig. 10 einen Schnitt durch eine Einrichtung der hier angegebenen Art in einer praktischen Ausführungsform mit einer Mehrzahl von Behältern für die zu behandelnde Flüssigkeit, und
Fig. 11 eine perspektivische, teilweise aufgeschnittene Darstellung einer besonders zweckmäßigen Form einer Kühleinrichtung mit einer den Wärmetransport zu einem Behälter verbessernden Hülsenanordnung.

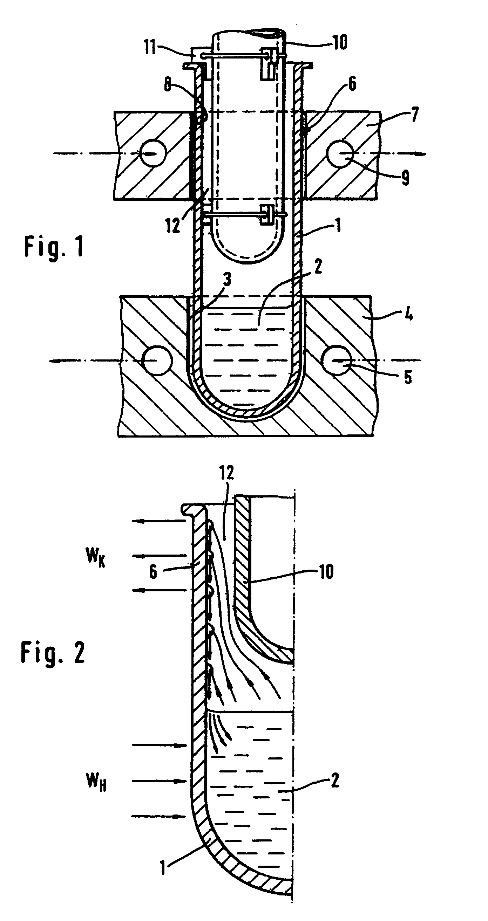

Fig. 1 läßt im Axialschnitt einen äußeren Behälter in Gestalt eines Reagenzglases 1 verhältnismäßig großen Durchmessers erkennen, welches in einem ersten, unteren Behälterraum 2 eine Füllung einer zu behandelnden Flüssigkeit enthält. Das Reagenzglas 1 ist in eine mit angepaßten Ausnehmungen 3 versehene Heizplatte 4 gestellt, welche von Heizmittelkanälen 5 durchzogen ist, in welche, wie durch strichpunktierte Pfeile angedeutet, ein Heizmittel eingeführt und von dort wieder abgeführt werden kann. Die Heizplatte 4 kann beispielsweise eine Aluminiumplatte sein. In Abwandlung hiervon ist es auch möglich, in die Heizplatte 4 elektrische Heizschlangen einzubetten.

Im Bereich eines zylindrischen Behälterabschnittes 6 umgibt das Reagenzglas 1 eine Kühleinrichtung 7 in Gestalt einer Aluminiumplatte, welche mit Durchbrüchen 8 für den Durchtritt des Behälterabschnittes 6 versehen ist und. welche von Kühlmittelkanälen 9 durchzogen ist, in welche, wie ebenfalls durch strichpunktierte Pfeile angedeutet, ein Kühlmittel eingeführt und von dort wieder abgeführt werden kann, so daß der im Bereich der Kühleinrichtung 7 gelegene Behälterabschnitt 6 durch Strahlungsabsorption und durch intensive Konvektion im Spaltraum zwischen dem Behälterabschnitt und der Innenwand des Durchbruches 8 eine effektive Kühlung erfährt.

In das Reagenzglas 1 ist von oben ein Verdrängerkörper 10 in Gestalt eines weiteren, geringeren Durchmessers als das Reagenzglas 1 aufweisenden Reagenzglases so weit eingeführt, daß das untere Ende des Reagenzglases 10 bis unter den Bereich des Behälterabschnittes 6 hinabreicht, wobei das Reagenzglas 10 in dem Reagenzglas 1 durch Abstandshalter 11 koaxial gehalten ist, welche durch elastische Ringe am Umfang verteilt am Reagenzglas 10 festgehalten sind.

Die Durchmesser der Reagenzgläser 1 und 10 sind so gewählt, daß zwischen der Außenwand des Reagenzglases 10 und der Innenwand des Reagenzglases 1 ein schmaler zylindrischer Spaltraum entsteht, welcher hier als zweiter Behälterraum bezeichnet wird und in der Zeichnung die Bezugszahl 12 aufweist.

Wird, wie in Fig. 2 angedeutet, die Flüssigkeitsfüllung im Reagenzglas 1 innerhalb des ersten Behälterraumes 2 durch Wärmezufuhr entsprechend den Pfeilen W_{H} erhitzt, so verdampft an der Oberfläche der Flüssigkeitsfüllung ein Teil der Flüssigkeit und wird durch den vom Reagenzglas 10 gebildeten Verdrängerkörper daran gehindert, frei in dem Reagenzglas 1 zu dessen Öffnung hin aufzusteigen und abzuströmen, sondern wird von dem Reagenzglas 10 in Richtung auf die durch Wärmeentzug entsprechend den Pfeilen W_{K} gekühlte Innenwand des Reagenzglases 1 in dem den zweiten Behälterraum bildenden Spaltraum 12 gedrängt und zur intensiven Beströmung der gekühlten Behälterwand veranlaßt, wo eine rasche Kondensation stattfindet. Die Kondensattropfen rinnen an der Innenwand des Reagenzglases 1 wieder nach abwärts und werden der Flüssigkeitsfüllung im ersten Behälterraum 2 zugeführt.

Es hat sich gezeigt, daß durch diese einfache Anordnung eine sehr vollständige Kondensation des von der zu behandelnden Flüssigkeit aufsteigenden Dampfes erreicht wird, so daß die Flüssigkeitsverluste durch Verdampfung äußerst gering sind.

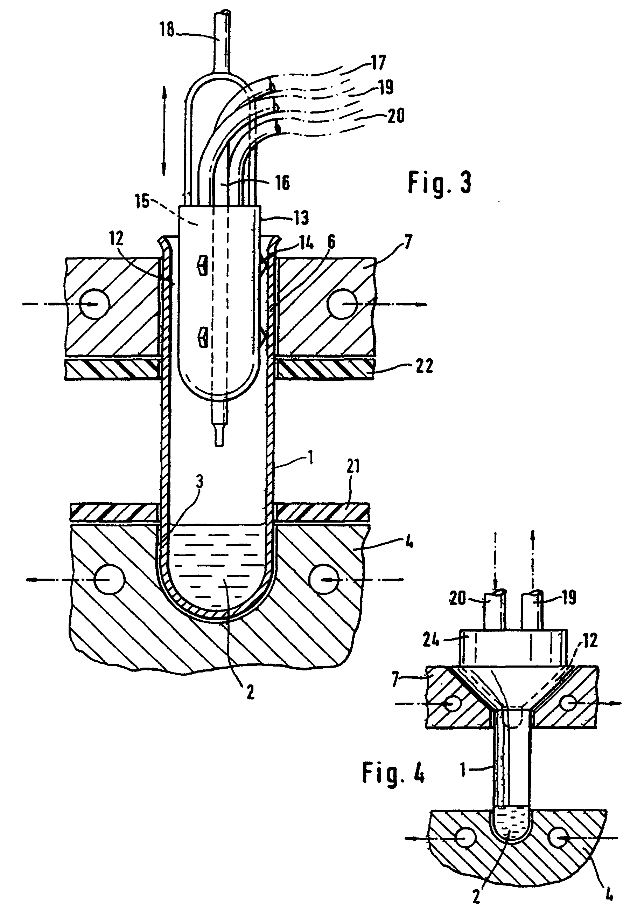

Die Ausführungsform nach Fig. 3, in der für entsprechende Teile gleiche Bezugszahlen verwendet sind wie in Fig. 2, unterscheidet sich von der zuvor betrachteten Ausführungsform zunächst dadurch, daß anstelle des inneren Reagenzglases 10 bei der Ausführungsform nach Fig. 3 ein geschlossener Behälter 13 als Verdrängerkörper dient, an dessen zylindrische Außenwand im Bereich des Behälterabschnittes 6 des Reagenzglases 1 Abstandshalterhöcker 14 angeformt sind, welche sich zur Einstellung der Weite des rundumlaufenden Spaltraumes 12 gegen die Innenwand des Behälters 1 abstützen. Durch den Innenraum 15 des Verdrängerkörpers 13 hindurch und gegenüber diesem Innenraum dicht abschließend ist ein Pipettenrohr 16 geführt, welches an eine Flüssigkeitsleitung 17 angeschlossen ist. Am unteren Ende des Verdrängerkörpers 13 ragt das Pipettenrohr 15 aus dem Verdrängerkörper hervor und kann durch Absenken des Verdrängerkörpers 13 an einer schematisch angegebenen Betätigungsvorrichtung 18 in den ersten Behälterraum 2 zum Einbringen oder zum Absaugen der darin befindlichen Flüssigkeitsfüllung abgesenkt werden. Weiter sind an den Innenraum des Verdrängerkörpers 15 Kühlmittelleitungen 19 und 20 angeschlossen, über welche ein Kühlmittel in den Innenraum 15 des Verdrängerkörpers 13 eingeführt und von dort wieder abgeführt werden kann, derart, daß der Spaltraum 12 in dem Behälterabschnitt 6 nicht nur mittels der diesen umgebenden Kühleinrichtung 7, sondern auch von innen her durch den Verdrängerkörper 13 gekühlt werden kann. Kondensat setzt sich daher sowohl an der Innenwand des Behälters 1 als auch an der Umfangswand des Verdrängerkörpers 13 ab und wird den Spaltraum 12 hinab zu der Flüssigkeitsfüllung des ersten Behälterraumes 2 zurückgeführt. Will man erreichen, daß sich das Kondensat nur an der Innenwand des Behälters 1 absetzt, so wird die Leistung der Kühlvorrichtung 7 entsprechend stärker eingestellt oder es wird der Ausführungsform nach Fig. 1 der Vorzug gegeben.

Fig. 3 zeigt noch zwischen der Heizeinrichtung 4 und der Kühleinrichtung 7 vorgesehene thermische Isolationsschichten 21 und 22 in Gestalt von mit Durchbrüchen für den Durchtritt des Behälters bzw. Reagenzglases 1 versehenen Isolierplatten. Solche Isolierplatten können auch bei der Ausführungsform nach Fig. 1 vorgesehen sein.

Bei praktischen Konstruktionen der hier angegebenen Einrichtung befinden sich die Heizeinrichtung 4 und die Kühleinrichtung 7 in einem festen Gestell, Rahmen oder Kasten mit Anschlüssen für die Heizmittelkanäle 5 und die Kühlmittelkanäle 9 für eine Mehrfachanordnung von Behältern oder Reagenzgläsern 1 und jeweils zugehörigen Verdrängerkörpern 10 bzw. 13.

Aus Fig. 4 ist erkennbar, daß der den zweiten Behälterraum bildende Spaltraum 12 in dem Behälterabschnitt des Behälters 1 nicht notwendigerweise zylindrisch ausgebildet sein muß, sondern auch kegelige Gestalt haben kann, wobei der Durchbruch 8 in der Heizeinrichtung 7, die Wand des Behälters 1 in dem den Spaltraum 12 begrenzenden Abschnitt und die Außenwand des Verdrängerkörpers, der hier mit 24 bezeichnet ist, entsprechend kegelig ausgebildet sind. Bei dem Verdrängerkörper 24 nach Fig. 4 handelt es sich wiederum um einen von Kühlmittel durchströmten Verdrängerkörper, wie durch die Kühlmittelzu- und ableitungen 19 und 20 angedeutet ist.

Es sei erwähnt, daß einer Ausführungsform etwa der in Fig. 1 gezeigten Art mit einer Kühlung des Behälterabschnittes 6 allein durch die Kühlvorrichtung 7 wegen der Einfachheit der notwendigen Teile und ihres Aufbaus, insbesondere bei einer Mehrfachanordnung von Behältern bzw. Reagenzgläsern 1 in einer Reihe oder einer Matrix in vielen Fällen der Vorzug zu geben ist.

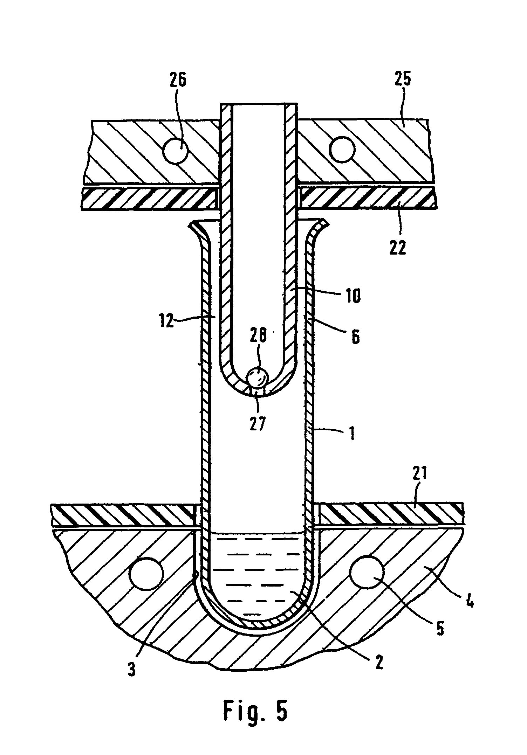

Bei der Ausführungsform nach Fig. 5 ist der untere Teil der Einrichtung mit Ausnehmungen 3 für Reagenzgläser 1 aufweisenden Heizplatte 4 genau so ausgebildet wie bei der Ausführungsform nach Fig. 1. Der Verdrängerkörper 10, der im Bereich des Behälterabschnittes 6 des Reagenzglases 1 zusammen mit dessen Innenwand den Spaltraum 12 begrenzt, ist jedoch hier nicht durch Abstandshalter oder dergleichen gegenüber dem Reagenzglas 1 abgestützt oder zentriert, sondern ist an einer Kühleinrichtung in Gestalt einer hier mit 25 bezeichneten Aluminiumplatte befestigt, welche von Kühlmittelkanälen 26 durchzogen ist und welche gegenüber der Heizplatte 4 und den in deren Ausnehmungen 3 eingesetzten Reagenzgläsern 1 in Vertikalrichtung zum Einsetzen der Verdrängerkörper 10 in die Reagenzgläser 1 abgesenkt oder zum Herausnehmen der Verdrängerkörper 10 aus dem Behälterabschnitt 6 der Reagenzgläser 1 angehoben werden kann.

Oberhalb der Heizeinrichtung 4 und unterhalb der Kühleinrichtung 25 sind ähnlich wie bei der Ausführungsform nach Fig. 3 Isolationsschichten 21 bzw. 22 angebracht.

Weiter ist am unteren Ende des Verdrängerkörpers 10, welcher hier als oben offener, reagenzglasartiger Hohlkörper vorgesehen ist, eine Öffnung 27 gebildet, auf der eine Kugel 28 aufliegt. Diese Kugel 28 kann in Zusammenwirkung mit der Öffnung 27 als Rückschlag-Entlüftungsventil dienen, wenn beispielsweise durch in Fig. 5 nicht eingezeichnete Einrichtungen am oberen Ende des bzw. jedes Reagenzglases 1 ein dichter Abschluß der ringförmigen Ausmündung des Spaltraumes 12 vorgesehen ist. Entsteht dann durch Wärmezufuhr mittels der Heizeinrichtung 4 in dem Innenraum des Reagenzglases 1 ein Überdruck, so kann sich dieser durch das von den Teilen 27 und 28 gebildete Rückschlagventil über den Innenraum des Verdrängerkörpers 10 entlasten.

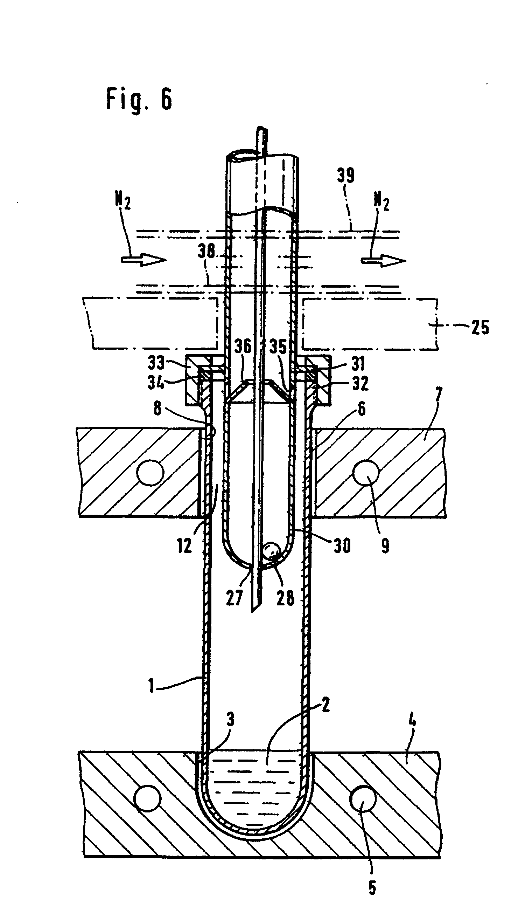

Die Öffnung 27 kann auch dazu dienen, einer über den Innenraum des Verdrängerkörpers 10 eingeführten Injektionsnadel oder Pipette Zutritt zu dem Behälterraum 2 im Reagenzglas 1 zu gewähren, um dort eine Flüssigkeitsfüllung einzubringen oder von dort abzusaugen. In diesem Falle verdrängt die Injektionsnadelspitze oder Pipettenspitze die Kugel 28 von der Mündung der Öffnung 27, so daß die Nadel oder Pipette an der Kugel 28 vorbeigeführt werden kann. Dieser Zustand ist im übrigen in der nachfolgend betrachteten Fig. 6 für den Fachmann deutlich erkennbar gezeigt.

Die Ausführungsform nach Fig. 6 enthält wiederum in Ausnehmungen 3 einer Heizeinrichtung 4 eingesetzte Behälter, beispielsweise Reagenzgläser 1, welche im Bereich eines oberen Behälterabschnittes 6 von einer mit Durchbrüchen 8 versehenen, Kühlmittelkanäle 9 aufweisenden Aluminiumplatte, welche die Kühleinrichtung 7 bildet, umgeben sind. Insoweit besteht Übereinstimmung mit der Ausführungsform nach Fig. 1 sowohl bezüglich Aufbau als auch hinsichtlich der Wirkungsweise.

Bei der Einrichtung nach Fig. 6 ist aber jedem Behälter 1 ein hier mit 30 bezeichneter, reagenzglasartiger Verdrängerkörper zugeordnet, der am unteren Ende ähnlich wie bei der Ausführungsform nach Fig. 5 eine Öffnung 27 und eine auf deren oberen Mündung sitzende Kugel 28 aufweist und etwa im mittleren Bereich seiner Axialerstreckung an der Außenfläche mit einem einstückig angeformten Radialflansch 31 versehen ist. Dieser Radialflansch 31 besitzt einen im wesentlichen gleichen Außendurchmesser wie ein mit Außengewinde versehener oberer Abschlußrand 32 des Behälters 1. Mittels einer Schraubmuffe 33 ist der Radialflansch 31 unter Zwischenlage eines Dichtungsrings 34 abdichtend gegen den oberen Rand 32 des Behälters 1 festgespannt. Man erkennt also, daß der Spaltraum 12 bei der Ausführungsform nach Fig. 6 an seinem oberen Ende abweichend von den bisher beschriebenen Ausführungsformen hermetisch abgeschlossen ist.

Von diesem oberen Bereich des Spaltraumes 12 aus führen durch die Wand des Verdrängerkörpers 30 hindurch in dessen Innenraum Entlüftungsöffnungen 35. Diese Entlüftungsöffnungen liegen etwas oberhalb einer umgekehrt trichterförmigen Einbauwand 36 des Verdrängerkörpers 30. Diese Einbauwand 36 hat die Aufgabe, daß dann, wenn an dem Spaltraum 12 vorbeigeführter und dort nicht kondensierter Dampf über die Entlüftungsöffnungen 35 des Verdrängerkörpers 30 in dessen Innenraum hochsteigt und dort an der Verdrängerkörperinnenwand kondensiert, die Kondensattropfen von der umgekehrt trichterförmigen Einbauwand 36 wieder auf die Entlüftungsöffnungen 35 gelenkt werden und den Spaltraum 12 hinab zu dem unteren Behälterraum 2 zurücklaufen.

Eine weitere, wichtige Aufgabe der Entlüftungsöffnungen 35 ist es, ein Festgehaltenwerden von Kondensat in dem Spaltraum 12 durch Kapillarwirkung zu verhindern, wenn sich Kondensattropfen im Spaltraum zu einer ringförmigen, an beiden Begrenzungswänden des Spaltraumes 12 anliegenden Flüssigkeitsfüllung vereinigen.

Es sei hier erwähnt, daß die umgekehrt trichterförmige Einbauwand 36 in ihrem Zentrum mit einer Öffnung versehen ist, welche groß genug ist, um die Kugel 28 durchtreten zu lassen und in den unteren Teil des Verdrängerkörpers 30 einführen zu können. Die zentrische Öffnung der Einbauwand 36 gestattet ebenso wie die Öffnung 27 am unteren Ende des Verdrängerkörpers 30 den Durchtritt einer Injektionsnadel oder Pipette für die bereits im Zusammenhang mit Fig. 5 erläuterten Zwecke.

Um über die Entlüftungsöffnungen 35 im Verdrängerkörper 30 hochsteigende Dämpfe sicher zu kondensieren, kann zusätzlich zu der Kühleinrichtung 7 oder anstelle von ihr, ähnlich der in Fig. 5 betrachteten Konstruktion, eine Kühlereinrichtung bzw. eine weitere Kühleinrichtung oberhalb des Radialflansches 31 des Verdrängerkörpers 30 auf diesen einwirken. Diese Kühleinrichtung ist in Analogie zu den Verhältnissen von Fig. 5 auch in Fig. 6 mit 25 bezeichnet.

Für viele Behandlungen von Reagenzien ist es von wesentlicher Bedeutung, daß der Innenraum des Verdrängerkörpers 30 und insbesondere der Innenraum des Behälters 1 gegenüber der Umgebungsatmosphäre vollständig abgeschlossen gehalten wird. Wird eine zu behandelnde Flüssigkeit in den unteren Behälterraum 2 des Behälters eingeführt und werden der darüber liegende Raum des Behälters 1 sowie auch der Innenraum des Verdrängerkörpers evakuiert oder mittels eines Inertgases gespült, so entsteht bei einem Gleichgewicht der Energiezufuhr durch die Heizeinrichtung und der Energieabfuhr durch die Kühleinrichtung im wesentlichen keine Druckdifferenz zwischen den erwähnten Innenräumen und der Umgebung, so daß es zu einer Verunreinigung der erwähnten Behälterinnenräume durch die Umgebungsluft nicht kommen kann. Praktisch aber entstehen während der Behandlung Druckdifferenz und beim Befüllen und Entleeren kann ein Zutritt von Umgebungsluft zu der zu behandelnden oder behandelten Flüssigkeit nicht immer ausgeschlossen werden.

Bei der Ausführungsform nach Fig. 6 ist im oberen Bereich des Verdrängerkörpers 30 eine Schleuse mit Schleusenwänden 38 und 39 schematisch angedeutet. Diese Schleusenwände enthalten im Bereich der Wand des Verdrängerkörpers 30 dicht angeschlossene, durchstechbare elastische Membranen und weiter ist die Außenwand des Verdrängerkörpers 30 im Abschnitt zwischen den Schleusenwänden 38 und 39 mit Durchbrüchen versehen oder ist ausgespart. Ein inertes Spülgas wird durch den zwischen den Schleusenwänden 38 und 39 gebildeten Raum geführt, wie durch die Pfeile N₂ angedeutet ist. Die gezeigte Anordnung verhindert einen Austritt von Dampf aus den Innenräumen der Einrichtung zur Umgebung hin und verhindert auch einen Zutritt von Umgebungsluft zu den Innenräumen der Einrichtung jeweils auch dann, wenn eine Füllung oder Entnahme mittels einer Injektionsnadel erfolgt.

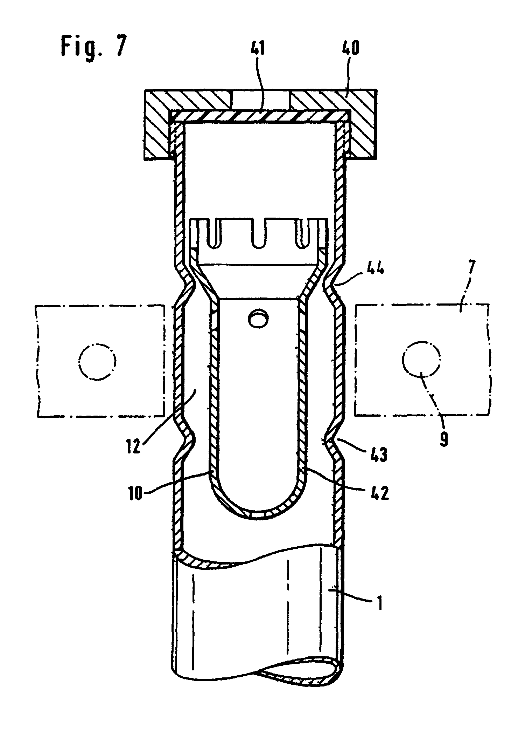

Fernerhin zeigt Fig. 7 eine Ausführungsform, bei der der obere Rand des Behälters 1 mit einem Außengewinde versehen ist, auf das eine mit einer zentrischen Öffnung versehene Schraubmuffe 40 unter Zwischenlage einer elastischen, durchstoßbaren Membran 41 aufgeschraubt ist, um den Innenraum des Behälters 1 hermetisch abzuschließen. Der hier mit 42 bezeichnete Verdrängerkörper besitzt eine untere Kondensatablauföffnung und seitliche Entlüftungsöffnungen in seinem oberen Bereich zum Verhindern eines Festgehaltenwerdens von Kondensat im Spaltraum 12 durch Kapillarwirkung.

Eine Zentrierung und Abstützung des Verdrängerkörpers 42 ist bei der Ausführungsform nach Fig. 7 durch punktweise oder rundumlaufende Einwölbungen 43 und 44 der Außenwand des Behälters 1 vorgenommen. Das obere Ende des Verdrängerkörpers 42 weist einen Absatz größeren Durchmessers auf, der sich gegen die rundumlaufende oder punktweise Einwölbung 44 der Wand des Behälters 1 abstützt. Zur Erleichterung des Kondensatrücklaufes kann oberhalb des Absatzes des Verdrängerkörpers 42 dessen Rand axial nach oben verlängert sein und gegebenenfalls zinnenartig ausgebildet sein.

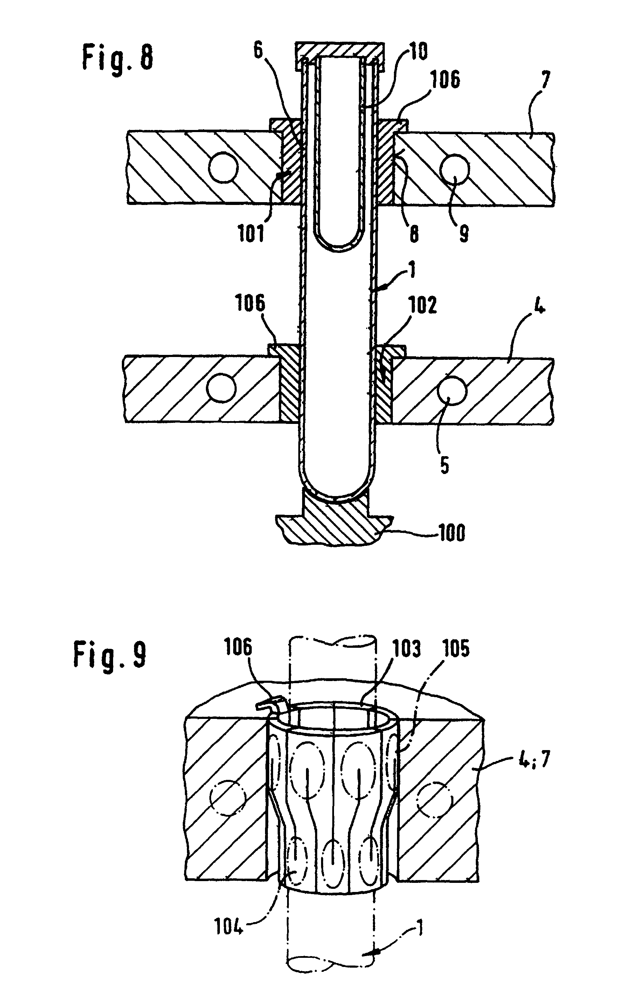

In Fig. 8 ist eine ähnliche Ausführungsform einer Einrichtung der hier betrachteten Art wie in Fig. 1 dargestellt. Allerdings reicht das als Behälter für die zu behandelnde Flüssigkeit dienende Reagenzglas 1 hier vollständig durch Durchbrüche der von Heizmittelkanälen 5 durchzogenen Heizplatte 4 hindurch und stützt sich an einem Gegenlager 100 ab. Im oberen Behälterabschnitt 6 reicht das Reagenzglas 1 durch die Durchbrüche 8 der von Kühlmittelkanälen 9 durchzogenen Kühlplatte 7 hindurch.

Dort, wo ein Wärmetransport etwa in Radialrichtung zwischen der plattenartigen Kühleinrichtung 7 und dem Behälter bzw. dem Reagenzglas 1 stattfindet, oder dort, wo ein Wärmetransport zwischen der plattenartigen Heizeinrichtung 4 und dem Behälter bzw. dem Reagenzglas 1 stattfindet, oder an beiden genannten Bereichen ist eine federnd aufweitbare Hülsenanordnung 101 bzw. 102 vorgesehen, welche aus gut wärmeleitendem Material, etwa aus Aluminium oder aus Kupfer, besteht. Diese Hülsenanordnungen bilden vergrößerte Wärmeleitungs-Kontaktflächen, einerseits zur Außenwand des Behälters bzw. des Reagenzglases 1 und andererseits zu der Innenwand des jeweiligen Durchbruches der plattenartigen Heizeinrichtung 4 bzw. der plattenartigen Kühleinrichtung 7 aus. Im allgemeinen wird bevorzugtermaßen eine federnd aufweitbare Hülsenanordnung 101 zwischen der Außenwand des Behälters 1 und der Innenwand des Durchbruchs der plattenartigen Kühleinrichtung 7 vorgesehen.

Gemäß einer schematisch in Fig. 9 gezeigten Ausführungsform können die Hülsenanordnungen 101 oder 102 von einer in Axialrichtung mehrfach teilweise geschlitzten Metallhülse 103 gebildet sein, welche mit Bereichen 104 ihrer Innenfläche an der Behälteraußenwand und mit demgegenüber versetzten Bereichen 105 ihrer Außenflächen an der Durchbruchinnenwand anliegt, so daß der Wärmeübergang von der plattenartigen Heizeinrichtung bzw. von der Kühleinrichtung 7 durch Wärmeleitung über die Metallhülse 103 zu der Außenwand des Behälters 1 ganz beträchtlich verbessert wird. Der Fachmann erkennt, daß gegenüber der in Fig. 9 angedeuteten Axialschlitzung der Metallhülse 103 auch ein anderer Verlauf eines oder mehrerer Schlitze in der Metallhülse vorgesehen werden kann, um ein bereichsweises Anliegen der Metallhülse an der Durchbruchinnenwand einerseits und der Behälteraußenwand andererseits unter Ausbildung kurzer metallischer Überbrückungs-Wärmeleitwege zu erreichen.

Die Metallhülse 103 kann durch radial vom oberen Rand abstehende Halteansätze 106 an der Oberseite der Heizeinrichtung oder Kühleinrichtung 7 abgestützt werden, um zu verhindern, daß beim Einstecken des Reagenzglases oder des Behälters 1 in die federnd aufweitbare Metallhülse 103 diese durch den Durchbruch der betreffenden plattenartigen Heizeinrichtung oder Kühleinrichtung hindurch geschoben wind. Entsprechend wirkende, rundumlaufende obere Flanschen der Ausführungsform nach Fig. 8 sind in dieser Zeichnungsfigur ebenfalls mit 106 bezeichnet.

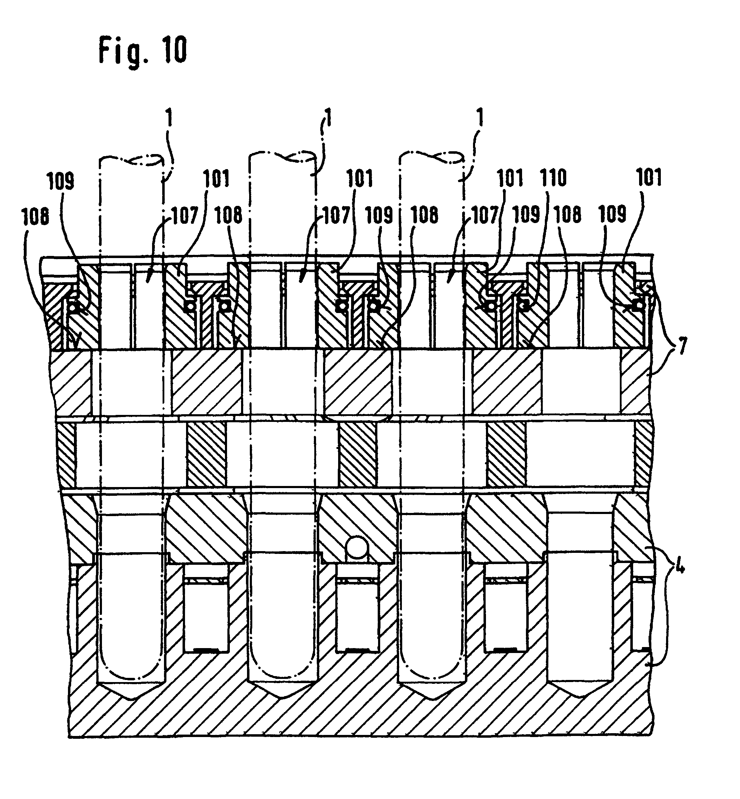

Bei der Ausführungsform nach Fig. 10 sind die plattenartige Kühleinrichtung 7 und auch die plattenartige Heizeinrichtung 4 jeweils in Horizontalebenen geteilt ausgebildet. Im Bereich der geteilten plattenartigen Kühleinrichtung 7 sind auf die Reagenzgläser oder die Behandlungsbehälter 1 den Wärmetransport zwischen der Kühleinrichtung 7 und einem Abschnitt der jeweiligen Behälter 1 verbessernde federnd aufweitbare Hülsenanordnungen 101 aufgesetzt. Diese Hülsenanordnungen 101 haben hier die Gestalt von Wärmeübertragungskörpern, die aus federnd zusammengehaltenen Sektorelementen zusammengesetzt sind. Die Wärmeübertragungskörper aus den Sektorelementen enthalten einen dem Außendurchmesser der Reagenzgläser 1 angepaßten Durchbruch 107 sowie Stirnflächen 108, welche an entsprechenden Gegenflächen der plattenartigen Kühleinrichtung 7 anliegen.

Bei der Ausführungsform der Hülsenanordnungen gemäß Fig. 10 haben die einzelnen Sektorelemente die Gestalt von Hohlzylindersektoren, die zu einem metallischen Hohlzylinderkörper zusammengesetzt und durch in rundumlaufende Nuten 109 eingelegte Federringe 110 zusammengehalten sind. Aus Fig. 10 ist ersichtlich, daß bei der hier gezeigten Ausführungsform die nach aufwärts orientierten Stirnflächen an den metallischen Hohlzylinderkörpern, welche mit entsprechenden, nach abwärts gerichteten Gegenflächen des oberen Teiles der zweiteiligen plattenartigen Heizeinrichtung 7 zusammenwirken, verhältnismäßig klein sind. Auch die nach unten weisenden Stimflächen 108 der metallischen Hohlzylinderkörper 101 sind Ringflächen nur verhältnismäßig kleinen Flächeninhaltes und wirken mit entsprechenden ringförmigen Auflageflächen auf der nach aufwärts weisenden Oberfläche des unteren Teiles der plattenartigen Kühleinrichtung 7 zusammen. Gleichwohl ist der Wärmeübergang zwischen diesem in Radialebenen mit Bezug auf die Behälterlängsachse gelegenen Wärmeübergangsflächen sehr groß und auch die Kontaktflächen zwischen den zylindersektorförmigen Innenflächen der Sektorelemente 107 und den Behälteraußenwänden sind groß, so daß sich ein hervorragender Wärmeübergang durch Wärmeleitung vom Inhalt der Behälter 1 über die Behälterwandung, die Hülsenanordnungen zu der Kühleinrichtung 7 hin einstellt.

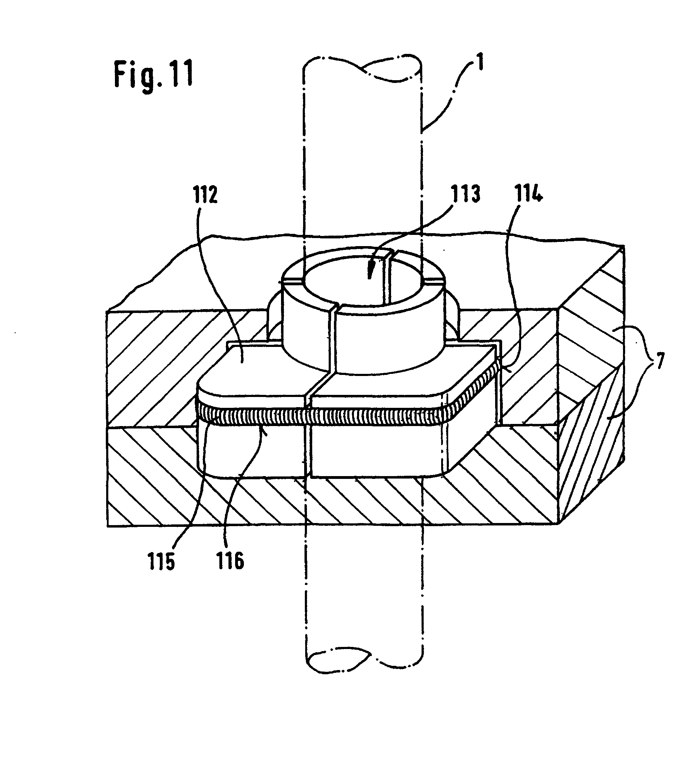

Diese Wirkung wird bei der in Fig. 11 ausschnittsweise und in perspektivischer Darstellung gezeigten Ausführungsform einer Hülsenanordnung dadurch wesentlich verstärkt, daß hier die einzelnen Sektorelemente, welche zu einem metallischen Wärmeübertragungsblock zusammengesetzt sind, von einem Zylindersektorabschnitt jeweils ausgehende, annähernd quaderförmige Ansätze 112 tragen, so daß ein metallischer Wärmeübertragungsblock aus federnd zusammengehaltenen Sektorelementen entsteht, welcher einen dem Außendurchmesser des Reagenzglases 1 bzw. des betreffenden Behälters angepaßten Durchbruch 113 aufweist und mit dem durch die Ansätze 112 gebildeten, etwa quaderförmigen Teil in eine etwa quaderförmige Ausnehmung 114 des oberen Teiles der plattenartigen Kühleinrichtung 7 passend eingesetzt ist, so daß die oberen und unteren, in Radialebenen zur Behälterachse gelegenen Stirnflächen des Wärmeübertragungsblockes an entsprechenden benachbarten Gegenflächen der Teile der plattenartigen Kühleinrichtung 7 in gut wärmeleitendem Kontakt anliegen.

Die einzelnen Sektorelemente sind durch einen Schraubenfederring 115, welcher in eine rundumlaufende Nut 116 des Wärmeübertragungsblocks eingelegt ist, zusammengehalten und um die Außenwand des Reagenzglases 1 zusammengespannt, um den wärmeleitenden Kontakt zu der Behälterwand zu verbessern. Die Form des durch die Ansätze 112 gebildeten Teiles des Wärmeübertragungsblocks in Anpassung an die Form der Ausnehmung 114 verhindert in wünschenswerter Weise eine leichte Verdrehbarkeit des Reagenzglases 1 gegenüber der plattenartigen Kühleinrichtung 7 bzw. gegenüber der gesamten Behandlungseinrichtung.

Es sei darauf hingewiesen, daß die hier angegebene federnd aufweitbare Hülsenanordnung, insbesondere als Wärmeübertragungsblock, zwischen einer plattenartigen Heiz- und/oder Kühleinrichtung und einem durch einen Durchbruch dieser Einrichtung oder dieser Einrichtungen reichenden Behälter den Wärmeübergang in überraschendem Maße verbessert und die notwendigen Temperaturdifferenzen herabzusetzen hilft und/oder die notwendigen Behandlungszeiten zu verringern hilft.

Den Ausführungsformen nach den Figuren 8 bis 11 ist gemeinsam, daß eine im oberen Behälterbereich und/oder im unteren Behälterbereich vorgesehene, federnd aufweitbare Hülsenanordnung in einem eine Vielzahl von Behandlungsstellen für eine entsprechende Vielzahl von Behälter aufweisenden System gestattet, thermische Verschiebungen durch Abkühlen der Kühleinrichtung und Aufheizen der Heizeinrichtung jeweils in zueinander entgegengesetzten Horizontalrichtungen auszugleichen, so daß derartige Verschiebungen in der Größenordnung von 1 mm ohne weiteres aufgenommen werden können, ohne daß ein Verkanten und Klemmen oder gar ein Bruch der Behälter beim vertikalen Einsetzen oder vertikalen Entnehmen und auch während der Behandlung zu befürchten ist.

## Patentansprüche

1. Einrichtung zur thermischen Behandlung von Flüssigkeiten in Behältern mit einem ersten Behälterraum, dem mittels einer plattenartigen Heizeinrichtung (4) zum Erhitzen und mindestens teilweisen Verdampfen der Flüssigkeit Wärmeenergie zuführbar ist, sowie mit einem zweiten Behälterraum, in den der Dampf zur mindestens teilweisen Kondensation einführbar und von dem Wärmeenergie mittels einer plattenartigen Kühleinrichtung (7) abführbar ist, sowie mit einem bzw. je einem Kondensatrückflußweg, der von dem zweiten zum ersten Behälterraum führt, **dadurch gekennzeichnet, daß** dort, wo ein Wärmetransport etwa in Radialrichtung zwischen der bzw. einer plattenartigen Kühleinrichtung (7) und/oder der bzw. einer plattenartigen Heizeinrichtung (4) einerseits und dem bzw. einem sich durch einen Durchbruch dieser Kühleinrichtung bzw. Heizeinrichtung erstreckenden Behälter (1) andererseits stattfindet, eine bzw. je eine federnd aufweitbare Hülsenanordnung (101, 102) aus gut wärme-leitendem Material eingesetzt ist, welche vergrößerte Wärmeleitungskontaktflächen (104, 105) einerseits zur Behälterwand und andererseits zum Durchbruch der betreffenden Kühleinrichtung bzw. Heizeinrichtung ausbildet.

2. Einrichtung nach Anspruch 1, **dadurch gekennzeichnet, daß** die Hülsenanordnung (103) von einer in Axialrichtung mehrfach teilweise geschlitzten, mit Bereichen (104) ihrer Innenfläche an der Behälteraußenwand und mit demgegenüber versetzten Bereichen (105) ihrer Außenfläche an der Durchbruchinnenwand anliegenden Metallhülse (103) gebildet ist.

3. Einrichtung nach Anspruch 1, **dadurch gekennzeichnet, daß** die Hülsenanordnung (101, 102) von einem aus federnd zusammengehaltenen Hohlzylindersektoren (107) zusammengesetzten, metallischen Hohlzylinderkörper gebildet ist, dessen Innendurchmesser im wesentlichen dem Behälteraußendurchmesser entspricht und dessen Stirnflächen (108) an parallelen Gegenflächen der Kühl- bzw. Heizeinrichtung (4, 7) anliegt bzw. anliegen.

4. Einrichtung nach Anspruch 1, **dadurch gekennzeichnet, daß** die Hülsenanordnung (101, 102) von einem aus federnd zusammengehaltenen Sektorelementen zusammengesetzten metallischen Wärmeübertragungsblock gebildet ist, welcher einen dem Behälteraußendurchmesser etwa entsprechenden Durchbruch (113) aufweist und in eine nicht-zylindrische, insbesondere etwa quaderförmige Ausnehmung (114) der Kühleinrichtung (7) bzw. Heizeinrichtung derart passend eingesetzt ist, daß Stirnflächen des Wärmeübertragungsblockes mit Bezug auf die Behälterlängsachse an Gegenflächen der Ausnehmung anliegen und der Wärmeübertragungsblock gegen Verdrehung gesichert ist.

5. Einrichtung nach Anspruch 3 oder 4, **dadurch gekennzeichnet, daß** die plattenartige Kühleinrichtung (7) bzw. Heizeinrichtung (4) zweiteilig ausgebildet ist, so daß Plattenteile um die Hülsenanordnung herum zusammenspannbar sind.

6. Einrichtung nach einem der Ansprüche 2 bis 5, **dadurch gekennzeichnet, daß** Sektorelemente der Hülsenanordnung durch Einlage eines federnd aufweitbaren Ringes, insbesondere eines Schraubenfederringes, in eine rundumlaufende Nut der Hülsenanordnung gegen die Behälteraußenwand hin anspannbar sind.

7. Einrichtung nach einem der Ansprüche 1 bis 6, **dadurch gekennzeichnet, daß** der erste Behälterraum (2) in einem Behälter (1) mit einem sich im wesentlichen vertikal nach aufwärts erstreckenden, zylindrischen oder prismatischen oder kegeligen Behälterabschnitt (6) gebildet ist, in den ein entsprechender zylindrischer oder prismatischer oder kegeliger massiver oder hohler Verdrängerkörper (10 bzw. 13 bzw. 24 bzw. 30 bzw. 42) derart eingesetzt ist, daß sich zwischen der Behälterabschnittinnenwand und der Verdrängerkörperaußenwand ein den zweiten Behälterraum bildender Spaltraum (12) ausbildet, in welchem Flüssigkeitsdampf zu einer intensiven Beströmung der Behälterabschnittinnenwand veranlaßt wird, daß die Heizeinrichtung (4) unterhalb des Behälterabschnittes (6) auf den Behälter (1) einwirkt und daß im Bereich des Behälterabschnittes (6) oder in thermischer Nähe oberhalb desselben die Kühleinrichtung (7; 13, 10, 20) als mit jeweils einer Öffnung (8) für den Durchtritt des zylindrischen oder prismatischen oder kegeligen Behälterabschnittes versehener Kühlblock auf die Behälterwand einwirkt.

8. Einrichtung nach Anspruch 7, **dadurch gekennzeichnet, daß** die Kühleinrichtung einen durch den Verdrängerkörper (13 bzw. 24) oder durch einen damit thermisch gekoppelten Kühlkörper (25) geleiteten Kühlmittelkreislauf (19, 20; 26) enthält.

9. Einrichtung nach Anspruch 7 oder 8, **dadurch gekennzeichnet, daß** durch den in den Behälter (1) absenkbaren Verdrängerkörper (10, 13, 30, 42) eine Pipette (16) oder Injektionsnadel zum Einleiten oder Entnehmen zu behandelnder Flüssigkeit in den bzw. aus dem Behälter (1) geführt ist, oder hindurchführbar ist.

10. Einrichtung nach einem der Ansprüche 7 bis 9, **dadurch gekennzeichnet, daß** an der Verdrängerkörperaußenwand Abstandshalter (11 bzw. 14) oder Absätze zur Führung und Abstützung des Verdrängerkörpers (10 bzw. 13) in dem Behälterabschnitt (6) gegenüber der Innenwand des Behälters (1) befestigt oder angeformt sind, oder daß an der Innenwand des Behälters (1) Einbuchtungen oder Absätze (43, 44) zur Führung und Abstützung des Verdrängerkörpers (42) eingeformt sind.

11. Einrichtung nach einem der Ansprüche 7 bis 10, **dadurch gekennzeichnet, daß** zwischen der Heizeinrichtung (4) und der Kühleinrichtung (7) mindestens eine jeweils mit einer Öffnung für den Durchtritt des Behälterabschnittes (6) versehene thermische Isolationsschicht (21, 22) vorgesehen ist.

12. Einrichtung nach einem der Ansprüche 7 bis 11, **dadurch gekennzeichnet, daß** die Heizeinrichtung als mit jeweils einer Ausnehmung (3) zur Aufnahme des unteren Behälterteiles vorgesehenen Heizplatte (4) ausgebildet ist.

13. Einrichtung nach einem der Ansprüche 7 bis 12, **dadurch gekennzeichnet, daß** der hohle Verdrängerkörper in seinem oberen Bereich den genannten Spaltraum (12) mit dem Verdrängerkörper-Innenraum verbindende Entlüftungsöffnungen (35) aufweist.

14. Einrichtung nach einem der Ansprüche 7 bis 13, **dadurch gekennzeichnet, daß** der hohle Verdrängerkörper (30) an das obere Ende des Behälters (1) dicht angeschlossen ist, an seinem unteren Ende eine den Verdrängerkörper-Innenraum mit dem genannten ersten Behälterraum (2) verbindende Öffnung (27) aufweist und an seinem oberen Ende über eine Inertgasschleuse (38, 39) zugänglich ist (Fig. 6).

15. Einrichtung nach einem der Ansprüche 7 bis 14, **gekennzeichnet durch** eine Reihenanordnung oder Matrixanordnung aus gleichen Behältern (1) mit vertikal aufragenden Behälterabschnitten (6), aus einer Kühleinrichtung (7) mit Öffnungen für die Behälterabschnitte, aus. diesen Behälterabschnitten zugeordneten Verdrängerkörpern (10 bzw. 13 bzw. 24 bzw. 30, bzw. 42) und aus einer für die unteren Behälterbereiche vorgesehenen Heizeinrichtung (4).

## Claims

1. A device for the thermal treatment of liquids in containers with a first container space, to which thermal energy can be fed by means of a plate-like heating device (4) for heating and at least partially vaporizing the liquid, and with a second container space, into which the vapor can be introduced for at least partial condensation and from which thermal energy can be removed by means of a plate-like cooling device (7), and also with a or a respective condensate return-flow path, which leads from the second container space to the first container space, **characterized in that** a, or a respective, resiliently expandable sleeve arrangement (101, 102) of material of good thermal conductivity is used where heat transport takes place approximately in the radial direction between the or a plate-like cooling device (7) and/or the or a plate-like heating device (4) on the one hand and the or a container (1) extending through an aperture of this cooling device or heating device on the other hand, which sleeve arrangement forms enlarged heat-conducting contact areas (104, 105), on the one hand with respect to the container wall and on the other hand with respect to the aperture of the relevant cooling device or heating device.

2. The device as claimed in claim 1, **characterized in that** the sleeve arrangement (103) is formed by a metal sleeve (103) which has a plurality of partial slits in the axial direction and bears with regions (104) of its inner surface against the container outside wall and bears with regions (105) offset thereto of its outer surface against the inside wall of the aperture.

3. The device as claimed in claim 1, **characterized in that** the sleeve arragement (101, 102) is formed by a metallic hollow cylinder put together from resiliently held-together hollow cylinder sectors (107), the inside diameter of which cylinder essentially corresponds to the outside diameter of the container and the end faces (108) of which cylinder bear against parallel mating faces of the cooling or heating device (4, 7).

4. The device as claimed in claim 1, **characterized in that** the sleeve arrangement (101, 102) is formed by a metallic heat transfer block put together from resiliently held-together sector elements, which block has an aperture (113) corresponding approximately to the outside diameter of the container and is inserted into a non-cylindrical, in particular approximately cuboidal, recess (114) of the cooling device (7) or heating device such that it fits in such a way that end faces of the heat transfer block bear against mating faces of the recess and the heat transfer block is secured against twisting with respect to the longitudinal axis of the container.

5. The device as claimed in claim 3 or 4, **characterized in that** the plate-like cooling device (7) or heating device (4) is of a two-part design, so that plate parts can be clamped together around the sleeve arrangement.

6. The device as claimed in one of claims 2 to 5, **characterized in that** sector elements of the sleeve arrangement are able to be clamped against the container outside wall by insertion of a resiliently expandable ring, in particular a helical spring ring, into a peripherally extending groove of the sleeve arrangement.

7. The device in accordance with one of the claims 1 to 6 **characterized in that** the first container space (2) is formed in a container (1) with an essentially vertically upward extending, cylindrical or prismatic or conical container portion (6), into which a corresponding cylindrical or prismatic or conical solid or hollow displacer (10 or 13 or 24 or 30 or 42) is inserted in such a way that a gap (12) forming the second container space is formed between the inside wall of the container portion and the outside wall of the displacer, in which gap liquid vapor causes the inside wall of the container portion to be subjected to an intensive flow, **in that** the heating device (4) under the container portion (6) acts on the container (1) and **in that**, in the region of the container portion (6) or in the thermal vicinity above the same, the cooling device (7; 13, 10, 20) acts on the container wall as a cooling block provided with in each case an opening (8) for the passing through of the cylindrical or prismatic or conical container portion.

8. The device as claimed in claim 7, **characterized in that** the cooling device includes a cooling agent circuit (19, 20; 26) directed through the displacer (13 or 24) or through a cooling device (25) thermally coupled to it.

9. The device as claimed in claim 7 or 8, **characterized in that** a pipette (16) or injection needle for introducing or removing liquid to be treated is guided into or out of the container (1), or can be guided through, by the displacer (10, 13, 30, 42), which can be lowered into the container (1).

10. The device as claimed in one of claims 7 to 9, **characterized in that** spacers (11 or 14) or shoulders for guiding and supporting the displacer (10 or 13) in the container portion (6) with respect to the inside wall of the container (1) are fastened to or formed on the outside wall of the displacer, or **in that** indentations or shoulders (43, 44) for guiding and supporting the displacer (42) are formed in the inside wall of the container (1).

11. The device as claimed in one of claims 7 to 10, **characterized in that** at least one thermal insulating layer (21, 22), in each case provided with an opening for the passing through of the container portion (6), is provided between the heating device (4) and the cooling device (7).

12. The device as claimed in one of claims 7 to 11, **characterized in that** the heating device is designed as a heating plate (4) provided with in each case a recess (3) for receiving the lower part of the container.

13. The device as claimed in one of claims 7 to 12, **characterized in that** the hollow displacer has in its upper region said gap (12) with the venting openings (35) connecting the inner space of the displacer.

14. The device as claimed in one of claims 7 to 13, **characterized in that** the hollow displacer (30) is connected in a sealed manner to the upper end of the container (1), has at its lower end an opening (27) connecting the inner space of the displacer to said first container space (2) and is accessible at its upper end via an inert gas lock (38, 39) (Figure 6).

15. The device as claimed in one of claims 7 to 14, **characterized by** a series arrangement or matrix arrangement comprising identical containers (1) with vertically projecting container portions (6), comprising a cooling device (7) with openings for the container portions, comprising displacers (10 or 13 or 24 or 30 or 42) assigned to these container portions and comprising a heating device (4) provided for the lower container regions.

## Revendications

1. Dispositif pour le traitement thermique de liquides dans des récipients, comprenant un premier compartiment de récipient, auquel de l'énergie calorifique peut être amenée au moyen d'un dispositif de chauffage (4) en forme de plaque pour l'échauffement et au moins l'évaporation partielle du liquide, ainsi qu'un deuxième compartiment de récipient dans lequel la vapeur peut être introduite pour au moins la condensation partielle et duquel de l'énergie calorifique peut être évacuée au moyen d'un dispositif de refroidissement (7) en forme de plaque, ainsi qu'une voie d'écoulement de retour de condensat, resp. une voie d'écoulement de retour de condensat pour chaque compartiment, qui mène du deuxième compartiment de récipient au premier compartiment de récipient, **caractérisé en ce que** là où un transport de chaleur a lieu, par exemple en sens radial entre le resp. un dispositif de refroidissement (7) en forme de plaque et/ou le resp. un dispositif de chauffage (4) en forme de plaque d'une part, et le resp. un récipient (1) passant à travers une ouverture de ce dispositif de refroidissement resp. de ce dispositif de chauffage d'autre part, un dispositif à douille (101, 102), resp. un dispositif à douille pour chaque compartiment, pouvant être élargi de manière élastique, en matériau bon conducteur de chaleur, est inséré, lequel forme de plus grandes surfaces de contact conductrices de chaleur (104, 105), d'une part vers la paroi du récipient et, d'autre part vers l'ouverture du dispositif de refroidissement resp. du dispositif de chaleur concerné.

2. Dispositif suivant la revendication 1, **caractérisé en ce que** le dispositif à douille (103) est formé par une douille métallique (103) partiellement fendue de manière multiple en sens axial, avec des parties (104) de sa surface intérieure adjacentes à la paroi extérieure du récipient et avec des parties (105) de sa surface extérieure, décalées par rapport à ces parties, adjacentes à la paroi intérieure de l'ouverture.

3. Dispositif suivant la revendication 1, **caractérisé en ce que** le dispositif à douille (101, 102) est formé par un corps métallique cylindrique creux, constitué par des secteurs cylindriques creux (107) maintenus ensemble de manière élastique, dont le diamètre intérieur correspond essentiellement au diamètre extérieur du récipient et dont les surfaces frontales (108) sont adjacentes à des contre-surfaces parallèles du dispositif de refroidissement resp. du dispositif de chauffage (4, 7).

4. Dispositif suivant la revendication 1, **caractérisé en ce que** le dispositif à douille (101, 102) est formé par un bloc métallique de transfert de chaleur constitué d'éléments de secteurs maintenus ensemble de manière élastique, lequel présente une ouverture (113) correspondant à peu près au diamètre extérieur du récipient et est inséré de manière ajustée dans un évidement (114), non cylindrique, notamment à peu près de forme parallélépipède rectangle, du dispositif de refroidissement (7) resp. du dispositif de chauffage, de telle sorte que les surfaces frontales du bloc de transfert de chaleur, par rapport à l'axe longitudinal du récipient, sont adjacentes aux contre-surfaces de l'évidement et que le bloc de transfert de chaleur est arrêté en rotation.

5. Dispositif suivant la revendication 3 ou 4, **caractérisé en ce que** le dispositif de refroidissement (7) resp. le dispositif de chauffage (4) en forme de plaque est formé en deux parties, de sorte que les parties en plaque autour du dispositif à douille sont aptes à être serrées ensemble.

6. Dispositif suivant l'une des revendications 2 à 5, **caractérisé en ce que** les éléments de secteurs du dispositif à douille peuvent être soumis à la tension contre la paroi extérieure du récipient dans une rainure circulaire du dispositif à douille, par insertion d'une bague, notamment d'une rondelle ressort, pouvant être élargie de manière élastique.

7. Dispositif suivant l'une des revendications 1 à 6, **caractérisé en ce que** le premier compartiment de récipient (2) est formé dans un récipient (1) ayant une section de récipient (6) cylindrique ou prismatique ou conique, s'étendant essentiellement de manière verticale vers le haut, dans lequel un corps de déplacement correspondant (10 resp. 13 resp. 24 resp. 30 resp. 42), cylindrique ou prismatique ou conique, plein ou creux, est inséré de telle manière qu'un espace en fente (12) formant le deuxième compartiment de récipient se forme entre la paroi intérieure de la section du réservoir et la paroi extérieure du corps de déplacement, dans lequel de la vapeur de liquide est forcée de s'écouler intensivement sur la paroi intérieure de la section du réservoir, de sorte que le dispositif de chauffage (4) en dessous de la section de réservoir (6) agit sur le réservoir (1) et que dans la partie de la section de réservoir (6), ou à proximité thermique au-dessus de celle-ci, le dispositif de refroidissement (7; 13, 10, 20) agit sur la paroi du récipient comme un bloc de refroidissement muni respectivement d'une ouverture (8) pour la pénétration de la section de réservoir cylindrique ou prismatique ou conique.

8. Dispositif suivant la revendication 7, **caractérisé en ce que** le dispositif de refroidissement comporte un circuit de refroidissement (19, 20 ;26) guidé à travers le corps de déplacement (13 resp. 24) ou à travers un corps de refroidissement (25) couplé thermiquement au corps de déplacement.

9. Dispositif suivant la revendication 7 ou 8, **caractérisé en ce qu'**une pipette (16) ou une aiguille d'injection est guidée ou apte à être guidée à travers le corps de déplacement (10, 13, 30, 42) abaissable dans le récipient (1) pour l'introduction ou l'extraction de liquide traitant dans le récipient (1) ou hors du récipient.

10. Dispositif suivant l'une des revendications 7 à 9, **caractérisé en ce que** des entretoises (11 resp. 14) ou des gradins sont fixés ou formés sur la paroi extérieure du corps de déplacement pour le guidage et le support du corps de déplacement (10 resp. 13) dans la section de récipient (6) par rapport à la paroi intérieure du récipient (1), ou **en ce que** sur la paroi du récipient (1) des creux ou des gradins (43, 44) sont formés pour le guidage et l'appui du corps de déplacement (42).

11. Dispositif selon l'une des revendications 7 à 10, **caractérisé en ce qu'**au moins une couche d'isolation thermique (21, 22) munie respectivement d'une ouverture pour la pénétration de la section de récipient (6) est prévue entre le dispositif de chauffage (4) et le dispositif de refroidissement (7).

12. Dispositif suivant l'une des revendications 7 à 11, **caractérisé en ce que** le dispositif de chauffage est formé comme une plaque de chauffage (4) prévue avec respectivement un évidement (3) pour le logement de la partie inférieure du récipient.

13. Dispositif suivant l'une des revendications 7 à 12, **caractérisé en ce que** le corps de déplacement creux présente dans sa partie supérieure ledit espace en fente (12) muni des ouvertures d'aération (35) reliant l'espace intérieur du corps de déplacement.

14. Dispositif suivant l'une des revendications 7 à 13, **caractérisé en ce que** le corps de déplacement creux (30) est raccordé de manière étanche sur l'extrémité supérieure du récipient (1), qu'il présente sur son extrémité inférieure une ouverture (27) raccordant l'espace intérieur du corps de déplacement au dit premier compartiment de récipient (2) et, qu'il est accessible sur son extrémité supérieure par l'intermédiaire d'une écluse à gaz inerte (38, 39) (fig. 6).

15. Dispositif suivant l'une des revendications 7 à 14, **caractérisé par** une disposition en rangées ou en matrices de récipients identiques (1) avec des sections de récipients (6) dépassant verticalement, un dispositif de refroidissement (7) comprenant des ouvertures pour les sections de récipient, des corps de déplacement (10 resp. 13 resp. 24 resp. 30, resp. 42) correspondant à ces sections de récipient et d'un dispositif de chauffage (4) prévu pour les parties inférieures du récipient.
